# EUROPEAN PATENT APPLICATION

(11) **EP 0 687 636 A1**
(43) Date of publication of application: **20.12.1995**
(21) Application number: 94201686.6
(22) Date of filing: 15.06.1994
(51) Int. Cl.: B65D 77/20, B32B 27/10

(54) **Lid for container**

(71) Applicant: DU PONT DE NEMOURS INTERNATIONAL S.A., CH-1218 Le Grand-Saconnex (Genève) (CH); ENSO-GUTZEIT OY, FIN-00160 Helsinki (FI)
(72) Inventor: Koskiniemi, Riitta, SF-48700 Kyminlinna (FI); Penttinen, Tapani, SF-49270 Pyhtää (FI); Salste, Matti, SF-55420 Imatra (FI); Trouilhet, Yves, CH-1222 Vesenaz (CH)
(74) Representative: von Kreisler, Alek, Dipl.-Chem.

(57) **Abstract**

A lid structure adapted to seal a container comprising (a) a paper layer, (b) a seal layer adapted to adhere to said container, (c) an paper reinforcing layer comprising polybutylene terephthalate positioned between said layers (a) and (b) is disclosed.

## Description

### Background of the invention

The present invention relates to a lid for a container, suitable for the packaging of goods, which lid is peelably openable along a seam of the container.

Such lids are used in unit packaging of consumer goods, such as food products, in particular those of the liquid-containing or semi-liquid-containing kind such as yoghurt, sourmilk, milk, juices, desserts and the like, and other consumer goods, such as cosmetics and pharmaceuticals. Here, the lid must provide sufficient hermeticity and hygiene. One of the most common lidding materials used to date is aluminium foil, which is typically sealed to the rims of the container by way of a lacquer.

Due to increasing requirements for environmentally compatible packaging, the use of aluminium foil lids is in disfavour due to the fact that aluminium is non degradable in waste processing. Moreover, the aluminium foil cover is readily torn, yet not easy to open peelably along its seam line of the container. Furthermore, aluminium lids are produced in a process which requires high energy consumption.

Known in the art are food product package lids made of paper laminated with plastic films, e.g. a lid composed of a paper layer, an adhesive, a polyester terephthalate (PET) and/or polyamide film and a lacquer, in order to attain impermeability and sealability. These lids have the disadvantage, however, of tending to curl during processing or when printed over, making them difficult to use in the manufacturing process.

In addition, lids containing polyamide produce NOχ, an undesirable gas, when incinerated.

It is an object of the present invention to provide a non-curling lid for a container useful for the packaging of goods, said lid being manufacturable by a simple process and offering a degree of hermeticity sufficient for assuring a long shelf life even for easily spoiling goods, such as food products. A further advantage of the lid of the present invention is that it produces no NOχ when incinerated. The lid structure adapted to seal a container according to the invention is characterized in that it comprises
(a) a paper layer,
(b) a seal layer adapted to adhere to said container, and
(c) a paper reinforcing layer comprising polybutylene terephthalate positioned between said layers (a) and (b).

The lid structure according to the invention may further comprise:
(d) a tie layer positioned between said layers (b) and (c); and (e) a tie layer positioned between said layers (a) and (c) which tie layers serve to prevent delamination of the lid structure.

By virtue of the seal layer, the lid is readily and nontearingly openable (peelable) along the sealed seam. The lid according to the invention provides an ease-of-use that facilitates the use of a paper-based lid that can replace aluminium foil lids in the packaging of food products.

As used herein, the terms set forth below have the following meanings.

"Paper layer" refers to a layer of the lid structure according to the invention which is based on a paper material. Such papers are generally known to one skilled in the food packaging art.

The paper material may be e.g., sulfate pulp based, bleached, filler-containing and coated paper grade with a basis weight in the range 30-200 g/m², preferable 50-120 g/m².

The outer surface of the paper layer, which is the surface upon which appears printing or some other form of identifying the contents of the container, can be either coated with a polymer or lacquer or left uncoated, as known in the art.

The "seal layer" represents a layer of the lid which seals or bonds the lid to the container. The seal layer will comprise an adhesive substance known for adhering a lid to a plastic container, and includes lacquers and various known polyethylene-based adhesive resins. The seal layer will preferably form a seal with the container having a strength ranging from 2 to 6 N/15 mm over a temperature range of 80 °C to 170 °C, as measured by DuPont European Technical Center test procedure T94.

The ethylene-based adhesive will typically have a melt index less than about 28 and greater than about 5, a melting point above about 25°C, more preferably above about 50° (melt index numbers are determined according to the procedures of ASTM D-1238 (190°C using a 2.1 kg weight)).

Suitable such ethylene-based adhesive resins include random copolymers derived from a major portion of ethylene and a minor proportion of one or more relatively polar monomers such as:
1. Ethylenically unsaturated carboxylic acid monomers (e.g., acrylic acid, methacrylic acid, crotonic acid, etc.) or the neutralized metallic salts thereof (e.g., as found in the partially neutralized ehtylene/carboxylic acid copolymers which are commonly referred to in the art as ionomers);
2. vinyl esters of alkanoic acids (e.g., vinyl acetate, vinyl propionate, vinyl butyrate, etc.); and
3. lower alkyl or hydroxyalkyl (e.g., C₁ to about C₈) esters ether of the aforementioned ethylenically unsaturated carboxylic acids (e.g., methyl acrylate, ethyl acrylate, hydroxyethyl acrylate, n-butyl acrylate, methyl methacrylate, ethyl methacrylate, etc.).

These adhesive resins may include graft modified olefin polymers, such as, high density polyethylene/acrylic acid graft copolymers, and ethylene/vinyl acetate copolymers graft modified with ehtylenically unsaturated carboxylic acid monomers such as acrylic acid, maleic anhydride, etc.

The thickness of the seal layer may vary from 2-40 g/m², preferably from 10-30 g/m².

The "paper reinforcing layer", as its name implies, provides strength to the paper layer and prevents it from tearing during peeling of the lid from the container. The paper reinforcing layer comprises polybutylene terephthalate (PBT) and optionally other thermoplastics. PBT is a well known polyester. Particularly preferred PBT's for use in the invention will have a melt viscosity between about 100 to 1000 Pa·sec within a temperature range between 250° and 300°C and a shear rate range between 100 and 1000 l/sec.

The paper reinforcing layer may optionally further comprise polyethylene terephthalate (PET). PET may be blended with the PBT in order to reduce "neck-in" and "edge weave" during extrusion of the paper reinforcing layer onto the paper layer. Neck-in is a term used to describe the effect during extrusion in which the curtain of co-polymer melt draws inward, leading to a coating having an uneven width.

Edge weave refers to the effect during extrusion in which the edges of the curtain of co-polymer oscillate, leading to coating having uneven thickness at the edges.

Particularly preferred PET's for use in the invention will have a melt viscosity between about 100 to 1000 Pa·sec within a temperature range between 270° and 300°C and a shear rate range between 100 and 1000 l/sec.

Where the paper reinforcing layer comprises a blend of PBT and PET, it will typically comprise from 45 to 99 weight % PBT.

The thickness of the paper reinforcing layer may vary from 5-40 g/m², preferably from 10-30 g/m².

"Tie layer" refers to an optional layer which is situated between paper reinforcing layer (c) and the seal layer (b); and/or between the paper layer (a) and the paper reinforcing layer (c). The tie layer serves to enhance the adherence of these respective layers in such cases where the bond strength between the seal layer and the container tends to be comparable or greater than the bond strength between the other layers. This prevents the possibility of the lid from delaminating when it is removed from the container.

Typical tie layers will comprise a ethylene-based adhesive, as previously described, or a polyurethane. The tie layer will preferably have a melt temperature ranging from 170-270 ^{o}C, a melt index ranging from 3-30 g/10 min. at 190 ^{o}C and 2.16 kg and elongation at break of at least 100%
Preferred materials for the tie layer are ethyl vinylacetate (EVA), ethylene ethylacrylate (EEA), ethylene butylacrylate (EBA) or ethylene methylacrylate (EMA).

The thickness of the tie layer will be selected according to the types of substrate and barrier layer, and will typically range from 1-5 g/m² in thickness, preferably from 2-3 g/m².

Additives: in addition to the above-discussed requisite polymer components, the polymer layers described herein can further contain other additional polymeric components as well as the usual additional ingredients and additives conventionally employed in the art for various purposes in polymer compositions, films and the like, such as for example, dyes, pigments fillers, anti-oxidants, slip, anti-block and chill-roll release agents, etc. When such optional ingredients are employed, their usage is generally in the content range or loading level typically utilized in the art for such purposes.

The container to be sealed by a lid according to the present invention will comprise any plastic conventionally used in food or consumer products packaging such as polypropylene, polystyrene, polyester or alternatively, cardboard coated with a low density polyethylene. The particular material of the container is a matter of choice, depending upon the ultimate end use, i.e. the type of food to be packaged and storage conditions, although the degree of impermeability of the container should be at least as high as that of the lid.

### Methods of Manufacture

The lid according to the invention can be made by way of any conventional coextrusion process. Likewise, the lid may be adhered to the container using known techniques. For example, a moving web of the paper base may be simultaneously coated with the polymer layers, i.e. the seal layer, the paper reinforcing layer and optionally the tie layer, and the lid thereby formed may be thereafter applied to the rim of a ready-filled container and sealed by known techniques, e.g. heat-sealing or ultra-sonic or high-frequencing sealing, preferably by heat-sealing.

The method by which the polymer layers of the present invention are prepared is not particularly critical to the invention and any conventional or non-conventional method and equipment (e.g., conventional extrusion equipment, Brabender mixers, etc.) can, therefore, be employed to admix the required components in the desired proportions.

Accordingly, conventional extrusion or coextrusion equipment and processes can be used for obtaining intimate admixture of the individual components of the present polymer layers and for applying these layers to a paper layer base. The polymer layers can be formulated in a separate extrusion compounding operation prior to the extrusion.

Alternatively, the individual components of the subject polymer layers can simply be pre-blended (e.g. in pelletized, granular or powdered form) prior to being fed into the extruder used in the film-forming or extrusion coating operation (or can be individually fed as separate, appropriately metered feed streams to said extruder), with the desired degree of intimate admixture of said components then being accomplished in said film-forming or extrusion coating extruder rather than in a separate compounding operation.

### Examples

The following examples describe suitable methods for forming lids according to the invention.

### Example 1: Forming lid by coextrusion coating:

Paper having a weight of 80 g/m² is coated with a three layer coextrusion (paper reinforcing layer / tie layer / seal layer) comprising SELAR PT 6129 (a PBT)/ BYNEL E369 / BYNEL E214 (EMA-based resins) (all of which are available from the DuPont Company) having thicknesses of 20/5/20 g/m², respectively. The extruder temperatures are maintained at 270 °C, 280 °C, 290 °C, 300 °C, 290 °C (feed zone to metering zone) for the SELAR extruder and 200 °C, 230 °C, 270 °C, 290 °C for the BYNEL extruders. The paper is coated at rate of 100 m/min.

### Example 2: Forming lid by coextrusion coating and lacquering:

SELAR PT 6129 is applied as a paper reinforcing layer at a thickness of 20 g/m² to a paper having a weight of 80 g/m² at a rate of 100 m/min. The paper reinforcing layer is subsequently coated with a tie layer of ADCOTE 322 (a polyurethane primer available from Morton Chemical, Netherlands) at a thickness of 1 g/m². Subsequently a coating of ADCOTE 35K2-40 (a lacquer) at a thickness of 4 to 10 g/m² is applied to the tie layer by way of a pan and gravure roller. The lacquer is dried at 60 to 100 °C online.

## Claims

1. A lid structure adapted to seal a container comprising
(a) a paper layer,
(b) a seal layer adapted to adhere to said container,
(c) an paper reinforcing layer comprising polybutylene terephthalate positioned between said layers (a) and (b).

2. A lid structure according to claim 1 characterized in that layer (c) comprises a blend of polybutylene terephthalate and polyethylene terephthalate.

3. A lid structure according to claim 1 or 2 characterized in that layer (b) comprises an adhesive ethylene copolymer.

4. A lid structure according to claim 3 characterized in that layer (b) comprises a copolymer of ethylene and an ethylenically unsaturated carboxylic acid monomer, a vinyl ester of an alkanoic acid or an alkyl or hydroxyalkyl ester of the aforementioned ethylenically unsaturated carboxylic acids.

5. A lid structure according to any one of claims 1 to 4 further comprising
(d) a tie layer positioned between said layers (b) and (c).

6. A lid structure according to any one of claims 1 to 5 further comprising
(e) a tie layer positioned between said layers (a) and (c).

7. Use of a lid structure according to any one of claims 1 to 6 to seal a container.
